# EUROPEAN PATENT APPLICATION

(11) **EP 2 731 373 A1**
(43) Date of publication of application: **14.05.2014**
(21) Application number: 12192424.5
(22) Date of filing: 13.11.2012
(51) Int. Cl.: H04W 28/02

(54) **Method and apparatus for congestion notification**

(71) Applicant: NTT DoCoMo, Inc., Tokyo (JP)
(72) Inventor: Thakolsri, Srisakul, 80687 Munich (DE); Staehle, Dirk, 80687 Munich (DE); Kozu, Kazuyuki, 80687 Munich (DE)
(74) Representative: Betten & Resch

(57) **Abstract**

A method for notifying a congestion status in the wireless base station to a core network, said wireless base station being an access point that can be commonly shared among multiple user equipments (UE), said core network being a network that is operated by a network operator and comprising a mobility management entity a packet gateway PGW, a serving gateway SGW and a policy and charging rules function PCRF, wherein said core network further has implemented a policy and charging control PCC mechanism and a corresponding PCC signaling mechanism said method comprising :
providing said wireless base station with the capability to transmit a signal indicating a congestion status to said MME;
using said PCC signaling mechanism to forward a congestion notification indicating said congestion status from said MME to said PCRF or to said PGW.

## Description

### FIELD OF THE INVENTION

The present invention relates to a method and an apparatus for notifying a congestion status.

### BACKGROUND OF THE INVENTION

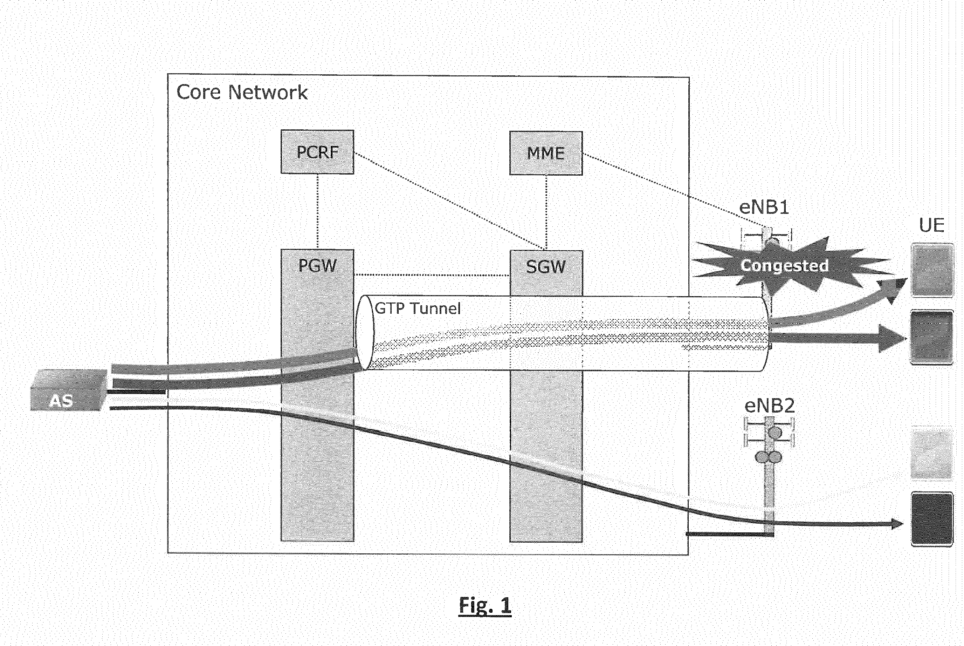

Fig. 1 illustrates a scenario where an data streams are sent from an application server AS via a core network and wireless base stations (also in the following referred to as E-UTRAN node B eNB) to mobile terminals (also referred to in the following as user equipments UE). It may now happen that due to some reasons, e.g. due to the data load, there occurs a congestion an eNB.

The prior art suggests various approaches how to deal with such a situation. According to one approach the UE may just send an end-to-end-report from the UE to the application server AS which then in turn may reduce the data rate. This is a mechanism which relies on an implementation in both the UE and the AS and therefore is not preferable.

A more preferable approach would be one which avoids an end-to-end signalling. Such an approach is illustrated in Fig. 2 and corresponds to what is for example disclosed in WO 2012/028972. Therein the congestion report is generated in the eNB rather than in the UE, and it is encapsulated in the GTP-U packets (GPRS Tunnelling Protocol User Plane) using the GT tunnel to transmit it from the eNB to the Packet data network GateWay (PGW) via Serving Gateway (SGW) of the core network. There the inspection of the packets leads to the identification of the congestion report, and in consequence there will be a reduction of the data rate of the AS based on the rules or policy.

This approach is preferable over the first one, since it does not need the end-to-end-signalling of the congestion notification. Nevertheless it relies on a specific type of tunnelling (the GTP-U tunnelling), and for different (proprietary) tunnelling mechanisms such as PMIP a different, separate implementation would be necessary.

Besides that it relies on the uplink packet in the user data plane, i.e. without a packet being sent there can be no congestion notification. Besides that a lot of signalling is involved, because it is bound to each bearer or even each specific flow.

It is therefore desirable to have another approach which avoids the disadvantages of the prior art.

### SUMMARY OF THE INVENTION

According to one embodiment there is provided a method for notifying a congestion status in the wireless base station to a core network,, said wireless base station being an access point that can be commonly shared among multiple user equipments (UE), said core network being a network that is operated by a network operator and comprising a mobility management entity MME, a packet gateway PGW, a serving gateway SGW and a policy and charging rules function PCRF, wherein said core network further has implemented a policy and charging control PCC mechanism and a corresponding PCC signaling mechanism said method comprising:
providing said wireless base station with the capability to transmit a signal indicating a congestion status to said MME;
using said PCC signaling mechanism to forward a congestion notification indicating said congestion status from said MME to said PCRF or to said PGW.

Thereby it may enable said core network to perform an appropriate congestion mitigation. Mitigating congestion can be done in several ways such as rate limitation, or compressing or transcoding the application data flow.

This enables a congestion signaling mechanism which is independent of the user plane, flexible and requires only minor changes to existing infrastructure.

According to one embodiment there is provided a method for implementing a congestion event policy in the wireless base station and in the core network in order to allow a core network to perform an appropriate congestion mitigation, said wireless base station being an access point that can be commonly shared among multiple user equipments (UE), said core network being a network that is operated by a network operator and comprising a mobility management entity MME, a packet gateway PGW, a serving gateway SGW and a policy and charging rules function PCRF, wherein said base station and said core network further have implemented a policy and charging control PCC mechanism and a corresponding PCC signaling mechanism , said method comprising:
using said PCC signalling mechanism for transporting a congestion event policy from said PCRF of said core network to said mobility management entity MME,
providing a signalling mechanism for transporting said congestion event policy from said MME to said wireless base station, and
using said congestion event policy in said wireless base station to decide based thereon which congestion status is to be indicated by said congestion notification.

This is a method for implementing the congestion notification by implementing the event policy and signalling it to the components involved using a signalling mechanism which is independent of the user plane, flexible and requires only minor changes to existing infrastructure.

According to one embodiment the signaling of said congestion status notification from said wireless base station to said core network leads via a signaling path from said wireless base station via said MME and said SGW to said PGW, or
from said wireless base station via said MME, said SGW and said PGW to said PCRF.

These two suitable implementations of the signal path in a core network.

According to one embodiment the PCC signalling mechanism between the MME and the PGW is used for sending the congestion status notification and a content related to the congestion status notification as a payload in the GTP-C protocol; and/or
the signalling mechanism between the wireless base station and the MME is implemented by sending the congestion status notification and a content related to the congestion status notification as a S1AP message using the S1AP protocol.

In this way the existing PCC signalling mechanism can be used for implementing a congestion notification signalling between MME and PGW. Moreover, for the signalling between the wireless station and the MME this also enables the usage of an existing signalling mechanism.

According to one embodiment the PCC signalling mechanism between the PGW and the PCRF uses
the PCC signalling mechanism for generating and/or defining a PCC trigger event by a message from the PCRF to the PGW, and/or
the PCC signalling mechanism for sending a PCC event report from the PGW to the PCRF for reporting a congestion event.

These are preferable implementations of how to use existing PCC infrastructure mechanisms, possibly with slight modifications like defining a new trigger event, in order to implement the congestion notification mechanism using PCC infrastructure.

According to one embodiment the PCC trigger event is defined as an event which occurs if a congestion status notification is received by the PGW which fulfils a certain trigger criterion. The criterion may e.g. be that the congestion status notification indicates a congestion status at all (compared to a non-congested status before), it may indicate a congestion beyond a certain level, or any other status which is interpreted by the PGW as a trigger event according to the trigger event definition.

According to one embodiment a message reporting a congestion status which indicates a congestion from the MME to the PGW triggers a PCC event report which indicates a congestion status to be forwarded from the PGW to the PCRF to thereby inform the PCRF about a congestion status.

This makes use of existing PCC event mechanisms to implement a congestion notification forwarding.

According to one embodiment the method further comprises:
- monitoring resource usage in said wireless base station;
- based on the resource usage monitored by said wireless base station, if said resource usage fulfils a congestion condition defined in a congestion event policy, transmitting said congestion notification such that said congestion status indicated by said congestion notification indicates a congestion by said wireless base station via said a signalling mechanism from the wireless access network to the core network and via said PCC signalling mechanism from said MME to said PGW or to said PCRF.

This enables an implementation of deciding in the base station when a congestion is to be reported and what to do, namely to send a congestion notification to the core network to thereby initiate the further signalling by the PCC signalling mechanism to the PGW or the PCRF.

According to one embodiment the method further comprises:
using said signalling mechanism for transporting a congestion event support notification being an information signalled by the wireless base station to the core network to inform the core network and indicating that the congestion notification service is supported by the wireless base station.

This enables the core network to be informed whether the wireless base station is capable of participating in the congestion notification mechanism.

According to one embodiment said congestion event policy contains
information on whether or not the wireless base station shall inform the core network about a congestion status by transmitting a congestion notification; and/or
information on how and/or when the wireless base station shall inform the core network about a congestion status by transmitting a congestion notification.

This is a way to implement a congestion status reporting policy. The information whether or not the wireless base station should report a congestion status can be used to "switch on" or to "switch off" the congestion reporting functionality.
The information on "how and/or when" the congestion status should be reported can be used to inform the base station (and possibly also other entities which may be comprised in the signalling path of the congestion status notification) about the "condition" when the congestion status should be reported. This may be information about a certain data rate threshold, a certain load level, or the like.

According to one embodiment said information comprises as a congestion condition for transmitting a congestion status one or more of the following:
- when resource usage reaches 90% of the total available resources;
- when the buffer at wireless base station for 80% of all UEs served by the same wireless base station is getting full or reaches a predetermined limit.
- any change in the congestion status
- when one or more UEs enter or leave the cell
- a time or interval after which a congestion update is transmitted

These are examples of implementations of a congestion criterion, which is used to defined a congestion event policy. The congestion criterion or condition may be used to define when a congestion status is to be notified. This may be in case of any change, for example, in case of a change of the UEs, in case of a congestion beyond a certain level, or it may be in case of the expiry of a certain tie interval.

According to one embodiment wherein said congestion status notification contains an information whether the wireless base station is congested or not congested.

This enables the congestion report to inform its recipients about whether the wireless base station is congested or not.

According to one embodiment said congestion notification transmitted for notifying the core network about a congestion status comprises further information in addition to the congestion status of the wireless base station, said further information comprising one or more of the following:
- an identifier of wireless base station;
- wireless channel information
- a congestion level of the wireless base station
- the point of congestion.

These are examples of further information which can be transmitted together with the congestion notification.

According to one embodiment there is provided an apparatus for notifying a congestion event in the wireless base station to a core network, said wireless base station being an access point that can be commonly shared among multiple user equipments (UE), said core network being a network that is operated by a network operator and comprising a mobility management entity MME, a packet gateway PGW, a serving gateway SGW and a policy and charging rules function PCRF, wherein said base station and said core network further have implemented a policy and charging control PCC mechanism which provides a signaling mechanism for signaling PCC events from said wireless base station to said PCRF, said apparatus comprising:
A module for providing said wireless base station with the capability to transmit a signal indicating a congestion status to said MME;
A module for using said PCC signaling mechanism to forward a congestion notification indicating said congestion status from said MME to said PGW or to said PCRF.

According to one embodiment there is provided an apparatus for implementing the notifying of a congestion event in the wireless base station to a core network, said wireless base station being an access point that can be commonly shared among multiple user equipments (UE), said core network being a network that is operated by a network operator and comprising a mobility management entity MME, a packet gateway PGW, a serving gateway SGW and a policy and charging rules function PCRF, wherein said base station and said core network further have implemented a policy and charging control PCC mechanism which provides a signaling mechanism for signaling PCC events from said wireless base station to said PCRF, said apparatus comprising:
A module for using said PCC signaling mechanism for transporting a congestion event policy from said PCRF of said core network to said wireless base station, and
A module for using said congestion event policy in said wireless base station to decide based thereon which congestion status is to be indicated by said congestion notification.

According to one embodiment there is provided an apparatus further comprising:
A module for carrying out a method according to one of the embodiments of the invention.

### DESCRIPTION OF THE DRAWINGS

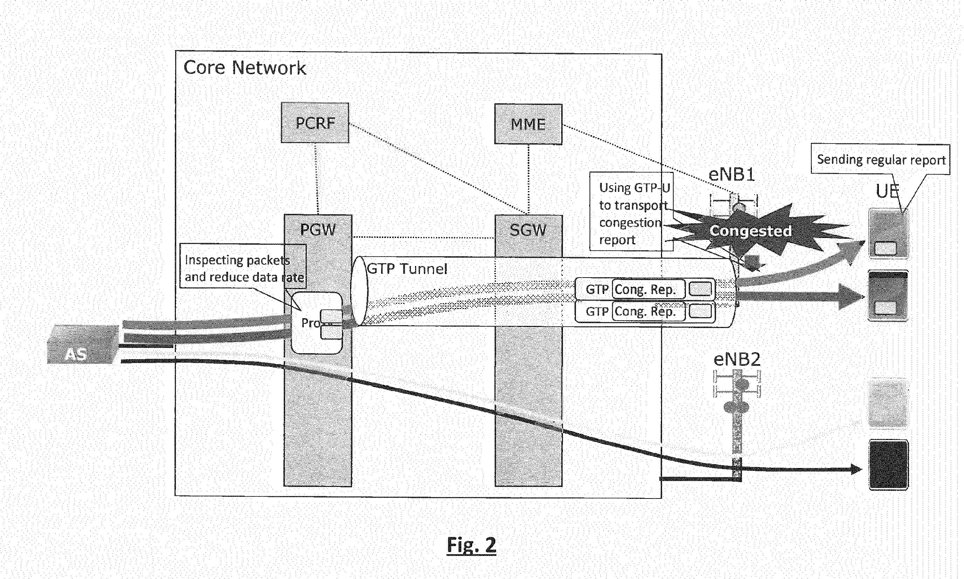

Fig. 1 and 2 illustrate congestion notification mechanisms according to the prior art.
Figs 3 to 20 illustrate congestion notification mechanisms according to embodiments of the invention.

### DETAILED DESCRIPTION

The present invention will be described in the following by means of exemplary embodiments.

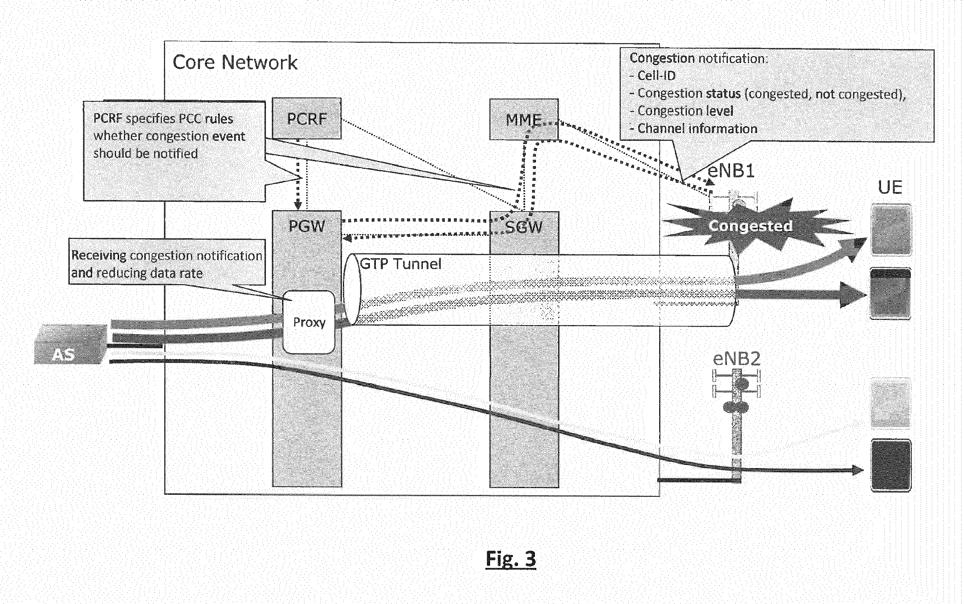

Fig. 3 illustrates an embodiment of the present invention.

It should be noted that in this embodiment the core network comprises a Packet data network GateWay (PGW), an Serving GateWay (SGW) and a mobility management entity (MME) as well as a policy and charging rules function (PCRF).

Using such a configuration, according to one embodiment there is made usage of existing policy and charging control (PCC) infrastructure with some (small) modifications in order to implement a congestion notification mechanism.
The "existing policy and charging control (PCC) infrastructure" which according to one embodiment is used comprises the PCC signalling mechanism for signalling between the MME and the PGW (via the SGW) and the signalling mechanism between the PGW and the PCRF. According to an existing prior art PCRF infrastructure the PCC signalling mechanism is implemented by using e.g. GTP-C protocol for the signalling between the MME and the PGW, and furthermore DIAMETER protocol us used for implementing the signalling between the PGW and the PCRF. The PCC infrastructure is an "event-based infrastructure" which uses so-called "PCC trigger events" which then trigger so-called PCC event reports.

The existing PCC infrastructure according to the prior art does this e.g. by defining a "trigger event" via a "trigger event message" sent from the PCRF to the PGW. There exists a specific "trigger event message" using the DIAMETER protocol for defining such trigger event related to policy and charging. The PGW then forwards the information about the trigger event to the MME using GTP-C. In this manner the entities involved then are informed about "what to do" if the circumstances which are defined in the "trigger event" message as trigger event actually occur.

If this (the occurring of circumstances defined in the trigger event message) takes place in the PGW, then the existing PCC infrastructure causes the PGW to sent a PCC event report to the PCRF to inform it about the trigger event having occurred. The PCRF then may take an appropriate action.

This is the existing "PCC infrastructure" which according to one embodiment and with some small modifications is used for congestion notification.

According to one embodiment the base station (or eNB) monitors its status as to whether it is congested or not. Once a congestion status occurs, as e.g. detected by some monitoring module in the eNB, the eNB sends a congestion status notification to the MME using a signaling mechanism. For this signaling there may in one embodiment be used the S1-AP protocol as the suitable mechanism which can send the congestion status notification as a payload.

The congestion status notification in one embodiment may just contain an indication of the congestion status (e.g. congested or not congested, or more detailed information like the congestion level in percent or using some indicator), it may further contain additional information like the cell-ID or the channel information or list of UEs affected by the congested base station.

According to one embodiment, however, the congestion status notification may just contain the information which has been changed compared with the previously send congestion status notification. In this manner only an update of the congestion status notification is signaled. For example, after the eNB has sent the first congestion notification to the PGW/PCRF, then if there is any further update of congestion afterwards, for instance, if the congestion level has been changed, then not all the previously sent information has to be signaled again like the first congestion notification, but only the differences (the "delta") of it is signaled. For example in such a case, only the change in the congestion level may be sent without channel-information.

The MME then forwards this congestion information via the SGW to the PGW. For that purpose according to one embodiment the existing PCC signalling mechanism such as the GTP-C protocol may be used, and the congestion status notification may then be sent as a payload of a GTP-C packet. In this manner the congestion status notification then can be sent from the MME to the PGW using an existing signalling mechanism which is independent of the user plane.

Once the congestion notification arrives at the PGW, the PGW signals the congestion notification to the PCRF. According to one embodiment for that purpose the existing PCC signalling mechanism can be used, e.g. by considering the congestion status notification to be a PCC event which triggers the forwarding of a PCC an event report from the PGW to the PCRF to inform the PCRF about the congestion status.

The PGW has been informed (previously) by the PCRF using a PCC trigger event message that a "trigger event" is defined which corresponds to the reception of a congestion status notification fulfilling a certain congestion condition by the PGW. The PGW checks whether the condition is fulfilled, and if so, the PCC event trigger is fired, to thereby generate a PCC event report.

If then a congestion status notification which fulfils the criterion (the "congestion condition") is received by the PGW; then report is sent to the PCRF. For that purpose the PCC event mechanism according to one embodiment is used by sending a PCC event report indication from the PGW to the PCRF. For the purpose of signalling between PCRF and PGW according to one embodiment the Diameter protocol is used.

Once the PCRF has been informed about the congestion status by receiving the congestion event report, an appropriate action may be taken, e.g. congestion mitigation (e.g., reducing the data rate either at the application server or in the core network, limiting the data rate) or applying different charging scheme based on the congestion status information.

In the foregoing there has been described the congestion status notification, i. e. how a congestion status is notified from the base station to the core network, and therein form the PGW to the PCRF. However, in order to enable the transmission of a congestion notification form the wireless base station to the core network and therein from the PGW to the PCRF, some "initialization" or "setup" procedure has to be performed which informs the components involved about the congestion policy.

It should be noted here that the term "congestion policy" or "congestion event policy" may have two different meanings alternatively or cumulatively depending on the embodiment. A first meaning in a first embodiment is that the congestion policy defines whether there should be a congestion status notification or not for the UE, or for the specific communication bearer in a communication network, or even for the specific flow within the communication bearer. A second meaning in a first embodiment is that the congestion policy defines the condition under which a congestion status notification should be sent. Then the network entities involved, form the base station to the PCRF are informed by the congestion policy "when" a congestion status notification is to be sent, i.e. under which "congestion condition" such a notification has to be sent. The congestion policy thereby may according to one embodiment further define which kind of information is to be sent, e.g. congestion status, cell ID, etcetera.

For the purpose of disseminating this kind of information among the network entities involved first the congestion policy is to be sent from the PCRF to the PGW, then from there to via the SGW to the MME and from there then to the eNB. For the signalling path from the PCRF to the PGW the congestion policy may be sent as a "PCC event trigger" message. According to another embodiment, however, a further message is sent from the PCRF to the PGW in addition to the PCC event trigger event message. This further message may be implemented using DIAMETER protocol and it may contain an attribute calue pair AVP specific for the purpose of distributing the congestion event policy.

Once the PGW has been informed, according to one embodiment it may forward the congestion event policy further to the MME via the SGW using the GTP-C protocol. From there it may then be forwarded according to one embodiment to the base statin using the S1AP protocol.

The initialization procedure (i.e. informing the network entities about the congestion event policy) according to one embodiment may be implemented as follows.

According to one embodiment the PCC event trigger is defined which triggers the sending of the PCC event report indication. For that purpose there may be sent from the PCRF to the PGW a message indicating that a new PCC trigger event is to be created. This can - according to one embodiment - be done by using a PCC event trigger message which defines the new trigger event or informs the PGW about it. For example it may be defined such that a change in the congestion status, which is sent by the MME via SGW to the PGW in form of a congestion status notification, may be regarded as an "trigger event" for triggering the congestion event (a "PCC event" as defined by the PCC event trigger message from PCRF to PGW), which then triggers the PCC event report to be sent from the PGW to the PCRF. This PCC event trigger can be implemented using according to one embodiment a "Diameter" message with the AVP code 1006:

In a similar manner the "congestion policy" which contains details about the congestion handling and monitoring (e.g. what is to be regarded as "congestion", e.g. 80% load, 10% load, i.e. when to send a congestion notification and which information to be included therein) can be forwarded from the PCRF to the PGW using e.g. Diameter messages. This can either be done by incorporating it into the PCC event trigger message or by using a separate message which can be implemented and sent using the DIAMETER protocol.

From the PGW then the congestion policy may then be sent via the SGW to the MME, so that the MME then is informed when a congestion notification is to be sent. The signal path from the PGW to the MME according to one embodiment may use the GTP-C protocol.

From the MME the congestion policy according to one embodiment then is transmitted to the eNB which then - like the MME - knows when to send a congestion notification and which information to be included therein. This may according to one embodiment be done using the S1AP protocol.

Once the initialization has been performed, the congestion status notification can be generated and transmitted from the eNB to the MME, and from there via the SGW to the PGW and from the PGW to the PCRF.

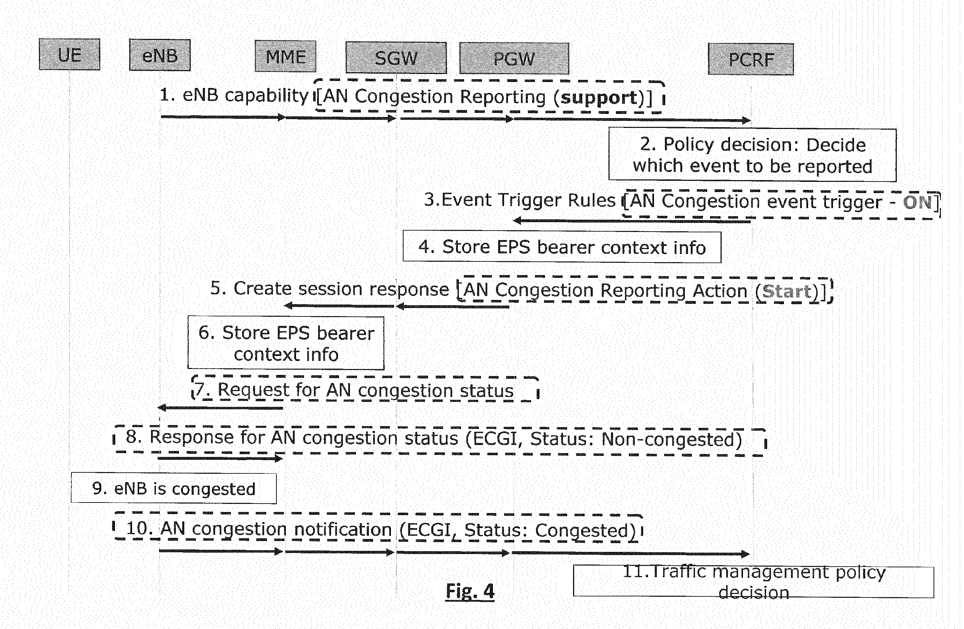

An example of the high-level signalling flow of the congestion notification according to one embodiment is illustrated in Fig. 4.

First the eNB in step 1 informs the components involved that it is capable of supporting access node (AN) congestion reporting.

The PCRF then decides based on the policy which event is to be reported. In this example, the PCRF decides the congestion event policy such that a congestion status which indicates a congestion at eNB is to be reported. The trigger rules are then in step 3 forwarded to the PGW which also stores the EPS bearer context information.

In step 5 the congestion reporting is "switched on" and then the MME in step 6 stores the EPS bearer context information.

Steps 7 and 8 then refer to a "polling" of the congestion status of the eNB by the MME and a corresponding response from the eNB.

If in step 9 it is determined that the eNB is congested a congestion status notification will be sent in step 10 which may include also other information in addition to the congestion status, for example, an identifier of eNB (E-UTRAN Cell Global Identifier, ECGI), congestion level of eNB, list of UEs affected by the congested eNB, wireless channel related information.

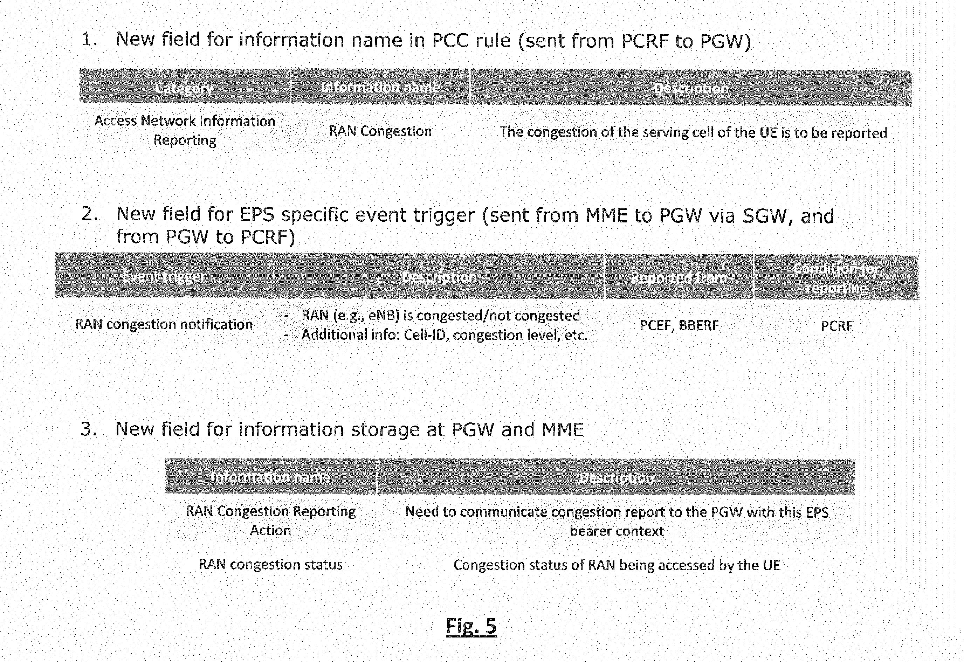

Fig. 5 schematically illustrates the modifications of an already existing PCC infrastructure which according to one embodiment are necessary to implement a congestion reporting according to an embodiment of the invention.

The first change refers to the new field for an information name in the PCC rule or, in other words to a new PCC event trigger. This is to be sent form the PCRF to the PGW and defines a new kind of PCC event, namely a "congestion event". The "congestion event" here means that "a congestion occurs".

The second new field is a new field for an EPS specific event trigger which is sent from the MME to the PGW and from there to the PCRF via the SGW. This is the congestion notification itself.

The third new filed is a new field for information storage at the PGW and the MME. This relates to the RAN congestion reporting action which is needed to communicate the congestion report to the PGW with the EPS bearer context. Further it relates to the congestion status of the RAN being accessed by the UE.

In the following further embodiments will be described in somewhat more detail.

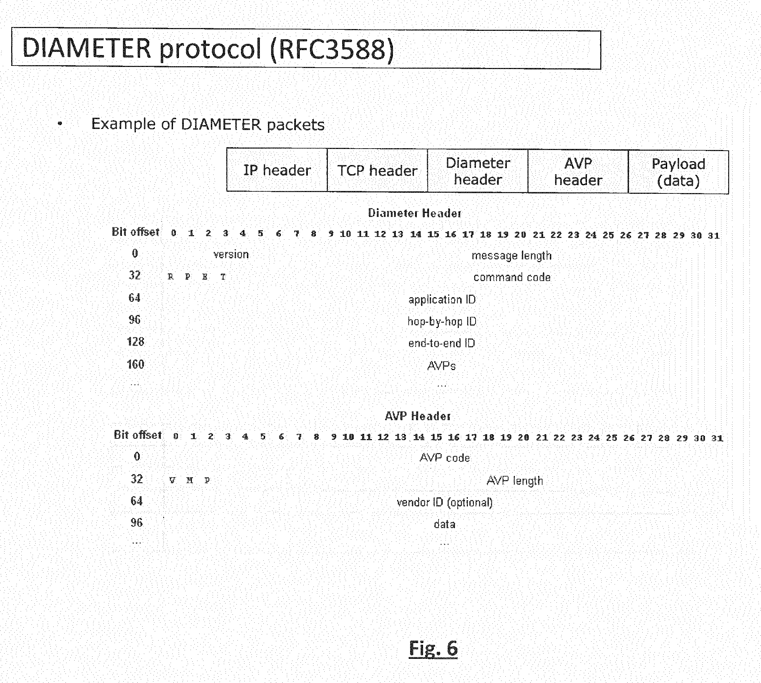

First of all, however, the Diameter protocol is illustrated in connection with Fig. 6 which illustrates an example of DIAMETER packets.

The Diameter protocol (RFC3588) consists of a header followed by one or more Attribute-Value-Pairs (AVPs). An AVP includes a header and is used to encapsulate protocol-specific data (e.g., routing information) as well as authentication, authorization or accounting information. It is used for signalling between the PCRF and the PGW.

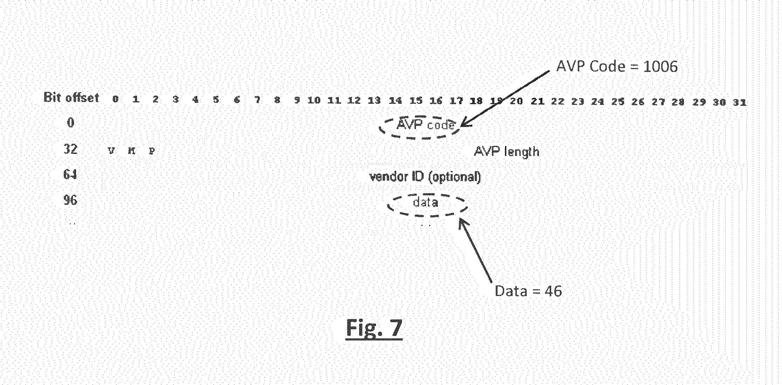

In connection with Fig. 7 there will now be explained how according to one embodiment a new event trigger can be implemented as an extension of a 3GPP PCC event trigger (see TS 29.212, section 5.3.7). For that purpose a new PCC event trigger is sent from the PCRF to the PCEF (which is the policy and charging enforcement function, a function co-located at the PGW). This uses a standardized PCC event trigger using the AVP code 1006. The new event trigger may in one embodiment be called "RAN_CONGESTION_STATUS_CHANGE", and the new value for the data of the PCC event trigger may be 46.

This new event trigger may be sent from the PCRF to the PCEF to indicate that upon a change in the RAN congestion status, the PCEF (a function co-located at PGW) shall inform the PCRF.

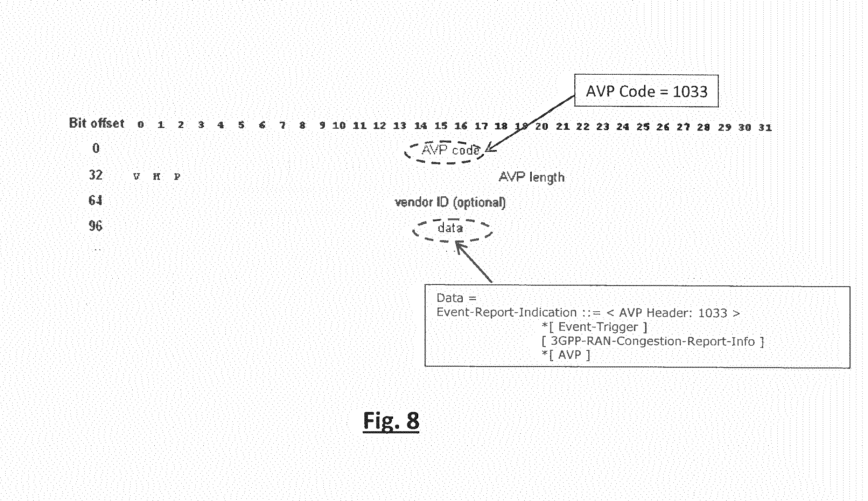

In connection with Fig. 8 there will now be explained how according to one embodiment a congestion status notification in form of a FCC event report indication can be implemented. It uses the already standardized PCC event report indication with the AVP code 1033 and the Diameter protocol.

The PCC Event Report Indication according to the embodiment shown in Fig. 8 contains a new 3GPP vendor specific AVP called "3GPP-RAN-Congestion-Report-Info". This PCC Event Report Indication is used to sent from the PCEF (a function co-located at PGW) to PCRF to report about RAN congestion status, and optionally, additional information such as Cell-ID, congestion status level, wireless channel info, list of UEs affected by the congested eNB, etc.

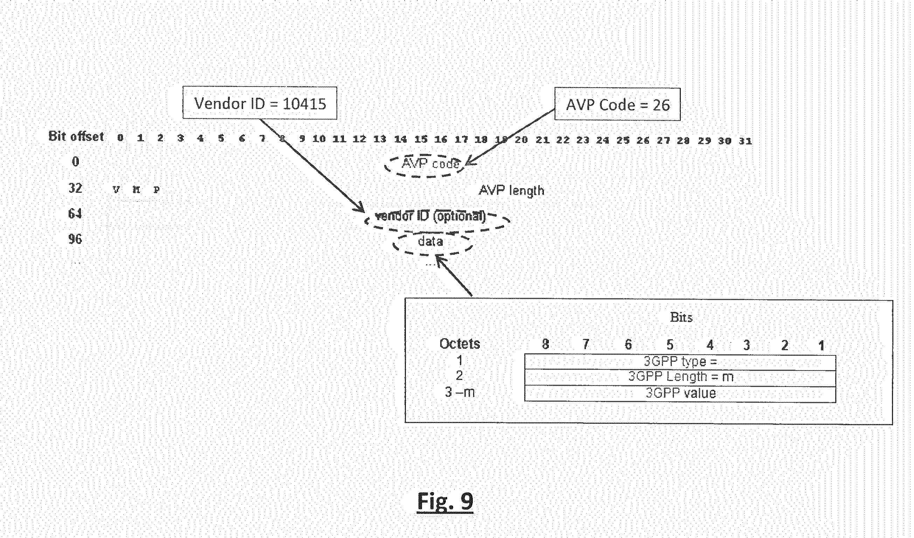

In Fig. 9 it is now described in more detail how according to one embodiment the 3GPP-A-Congestion-Report-Info is encoded in the DIAMETER protocol by an extension of 3GPP vendor specific AVP.

It uses the existing AVP code for vendor specific i.e. AVP Code = 26. It further uses the existing vendor ID for 3GPP vendor specific, i.e. vendor ID = 10415. Then there is introduced a new 3GPP vendor specific attribute called "3GPP-RAN-Congestion-Report-Info"

In this embodiment
3GGPP type = 29 (type 29 here is newly defined for "3GPP-RAN-Congestion-Report-Info")
3GPP Length = m; where m is the length of information that are to be sent in the congestion report
3GPP Value is the information that is the information that are to be sent in the congestion report, e.g., Cell-ID, congestion status (congested or not congested), congestion status level (e.g., 50% congestion level), wireless channel info, etc.

This 3GPP-RAN-Congestion-Report-Info is sent from the PCEF (co-located function at PGW) to the PCRF.

In this manner the signalling between PGW and PCRF can be implemented according to one embodiment.

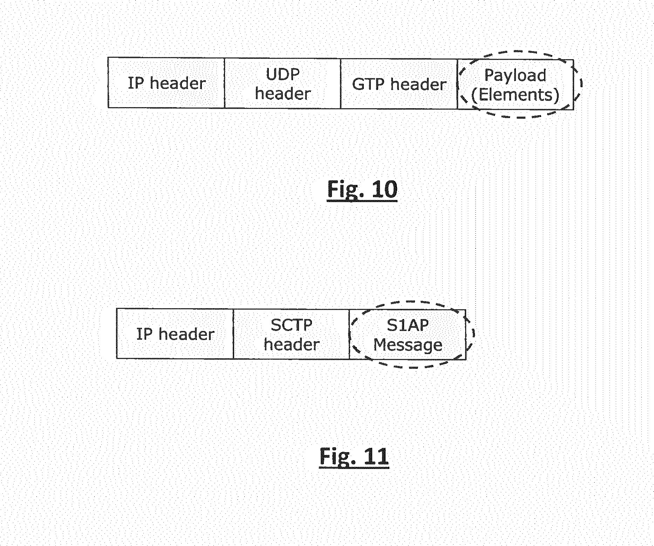

Now there will be described the signalling mechanism between the PGW and the MME. This mechanism according to one embodiment uses the GTP-C protocol. An example of a GTP-C packet is shown in Fig. 10. For that purpose there is introduced an extension of the GTP-C information element (as described in TS 29.274).

The payload elements of the GTP-C packet can be used to implement the congestion signalling mechanism by extending the GTP-C information elements.

In the GTP-C payload, according to one embodiment there is extended the existing "indication flag" of GTP-C information element by introducing a new type of "indication flag" called "RAN Congestion Reporting". This new type of "indication flag" is used to indicate whether the eNB is supporting reporting the RAN congestion information to the core network (SGW and PGW).

In the GTP-C payload, according to one embodiment there is further introduced a new GTP-C information element called "RAN Congestion Reporting Action". This information element is used when sending from PGW to MME via SGW to indicate whether AN congestion report is to be started or stopped. This in one embodiment relates to the initialization of the notification.

In the GTP-C payload, according to one embodiment there is further introduced a new GTP-C information element called "RAN congestion information". This new GTP-C information element is used to signal RAN congestion information to be sent from MME to PGW via SGW. The "RAN congestion information" contains, for example, RAN congestion status (congested/non-congested), RAN congestion level, Cell-ID info., listed of UEs affected by the congested eNB, wireless channel info. This is an actual implementation of the congestion status notification as sent form the MME to the PGW using the existing PCC signalling mechanism, namely the GTP-C.

In this manner the congestion signalling can be implemented between the MME and the PGW via the SGW.

An implementation of the signalling between the MME and the eNB is now explained in connection with Fig. 11. For that purpose there is introduced an extension of the S1-AP message (as described in TS 36.413).

Fig. 11 illustrates an example of a GTP-C packet with the S1AP message.

In the S1AP Message, according to one embodiment there are introduced two new S1AP message types

### a) "AN congestion status request"

This message is used to allow the MME to request the eNB to report the congestion status and (optional) other information related to congestion such as congestion status, congestion level, wireless channel info of the UE.

### b) "AN congestion status report"

This message is used to allow the eNB to provide to the MME the congestion status and (optional) other information related to congestion such as eNB identifier (ECGI), congestion status, congestion level, list of UEs affected by the congested eNB, wireless channel info of the UE.

In this manner there can be implemented a signaling mechanism using the PCC mechanism for AN congestion reporting and (optional) additional information from the wireless base station to enable congestion mitigation in a core network. This can be achieved by some enhancements of the existing PCC mechanism such as a new PCC event trigger and a corresponding new PGC event report.

In the following the signaling flow for a RAN (Radio Access Node) congestion notification according to a further embodiment will be described.

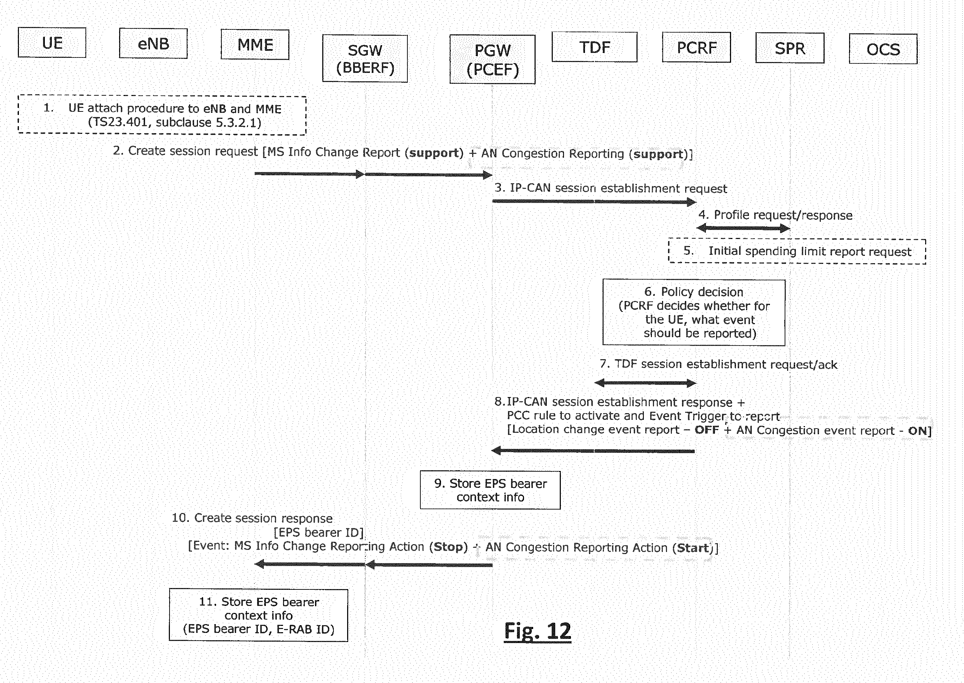

Fig. 12 shows a sequence diagram which illustrates the messaging according to one embodiment.

After the (conventional) attachment of the UE to the eNB in step 1 there is created a session request in step 2 which according to one embodiment includes an indication that the AN supports congestion reporting and which is sent from the MME to the PGW.

Steps 4 to 7 are conventional, but in step 8 there is sent from the PCRF to the PGW together with the IP-CAN session establishment response a message indicating that the AN congestion event report is to be set "ON". This corresponds to the settling of a PCC trigger event (i.e. according to one embodiment to the initialization).

Then in step 9 the EPS bearer context info is stored, and in step 10 together with the session response there is forwarded an AN congestion reporting Action message which starts the congestion reporting. This is sent from the PGW to the MME.

The MME in step 11 then stores the EPS bearer context info (such as EPS bearer ID, E-RAB-ID).

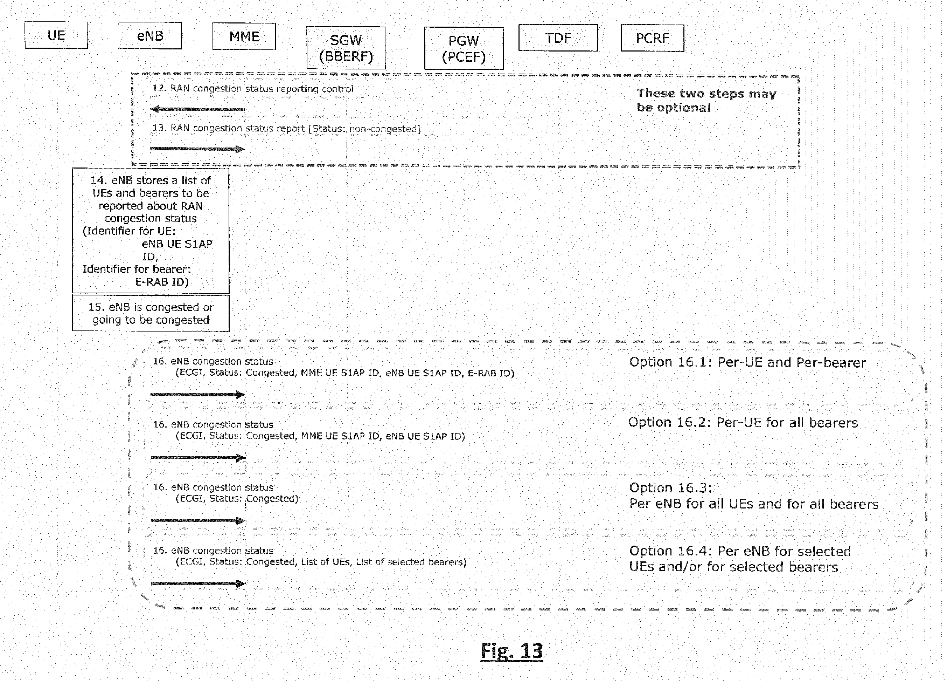

Fig. 13 shows as next (optional) steps 12 and 13 a RAN congestion status control message to which the eNB responds with a RAN congestion status report indicating the status non-congested.

In step 14 the eNB then stores a list of UEs and bearers to be reported about RAN congestion status. The identifiers may thereby in one embodiment be as follows:
- Identifier for UE: eNB UE S1AP ID,
- Identifier for bearer: E-RAB ID

Step 15 indicates then a situation where the eNB is congested or going to be congested as e.g. determined by some monitoring module which applies the PCRF rules to determine whether there is a congestion criterion fulfilled such that a congestion notification should be sent.

If this is the case, then in step 16 a message indication the congestion status, i. e. a congestion status notification is sent from the eNB to the MME. Fig. 13 illustrates several options how this congestion status notification can be sent. It may be sent per UE and per bearer as indicated in step 16.1, per UE for all bearers as in step 16.2, per eNB for all UES and for all bearers, or as option 16.4 per eNB for selected UEs and/or for selected bearers. The identifiers for sending these information according to the different options are also shown in Fig. 13. In all options the cell-ID (ECGI) is sent. It is to be noted that there may be other information related to congestion event also signaled along with the eNB congestion status message in step 16, for example congestion level, wireless channel information of UE or UEs affected by the congested eNB, etc.

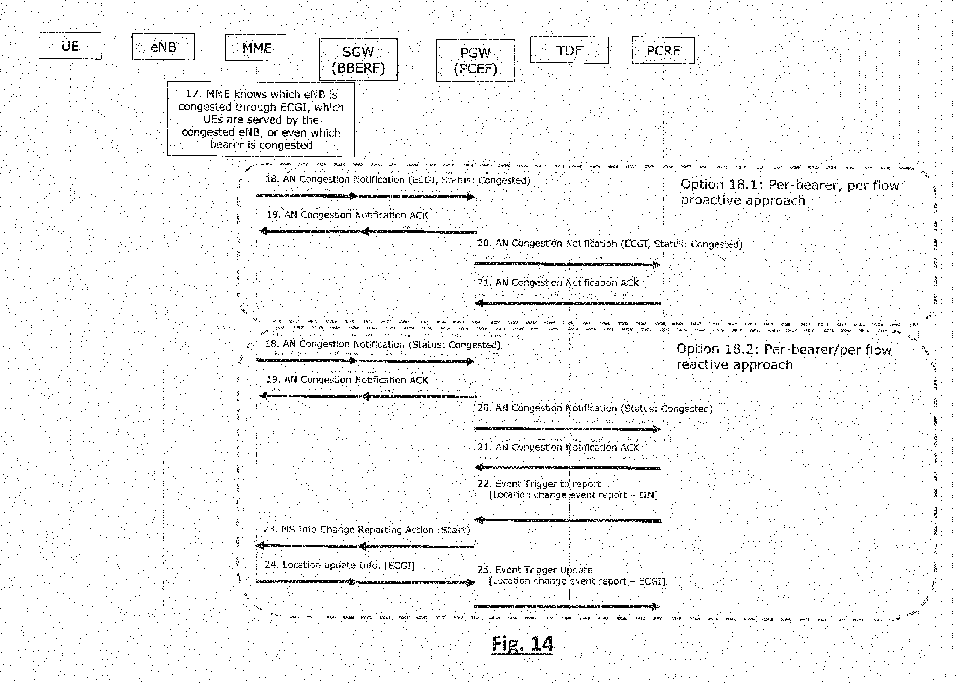

Step 17 of Fig. 14 indicates which kind of information the MME has obtained by the signaling of step 16. From the MME the information then is forwarded to the PGW (via SGW) and from there to the PCRF. This can be done in two ways as indicated by options 18.1 and 18.2 in Fig. 14. Option 18.1 indicates the proactive per-bearer, per flow approach, both in steps 18 to 21. Option 18.2 illustrates the case of a per-bearer, per flow reactive approach, where there is sent an event trigger from the PCRF to the PGW to switch a location change event report functionality on (step 22). From the PGW to the MME there is then sent a message (step 23) to start a mobile station info change reporting action. Location update info (i.e. a "new" mobile station or the leaving of a mobile station is sent via the cell ID ECGI in step 24 from the MME to the PGW. This then triggers a PCC event which has been defined by message 22, namely a location change event report comprising ECGI which is sent from the PGW to the PCRF.

It should be noted here that this messaging about location update using the PCC trigger event functionality is in principle independent of the congestion notification functionality. Also, this messaging is already published in the PCC infrastructure as specified in TS 23.203.

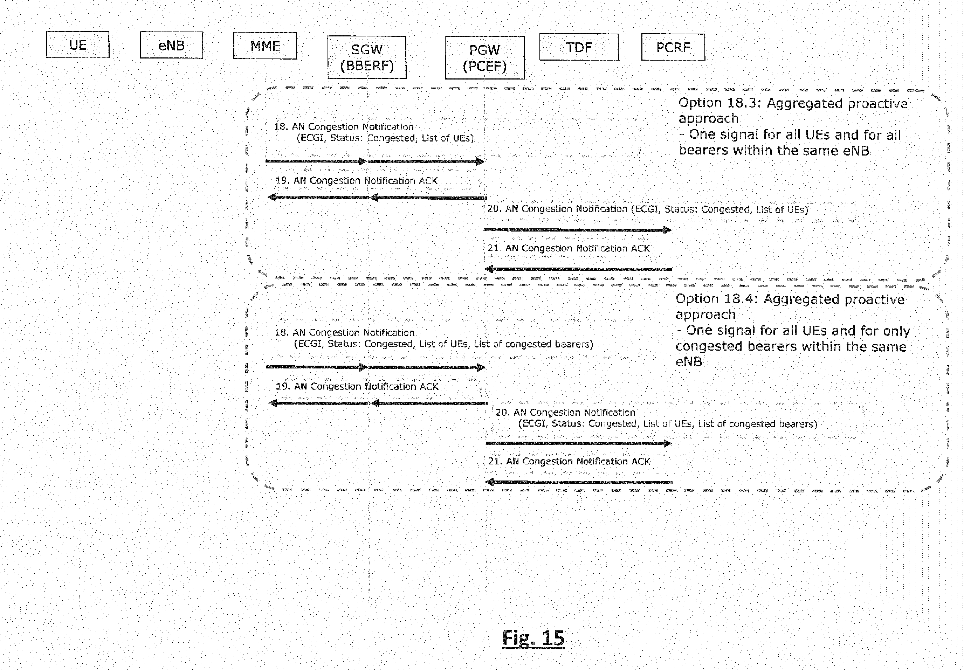

Fig. 15 illustrates two further options for the signaling between MME and PCRF. Option 18.3 illustrates the aggregated proactive approach where one signal for all UEs and for all bearers within the same eNB is sent. Option 18.4 illustrates aggregated proactive approach case where one signal for all UEs and for only congested bearers within the same eNB is sent.

It should be noted here that both option 18.3 and 18.4 are following a proactive approach in the sense that the eNB identifier (ECGI) is sent along with the AN congestion notification message (step 18). Whereas, option 18.1 and 18.2 are following a reactive approach in the sense that the PCRF will have to send an event trigger for location update to PGW, which in turn allows the PGW to ask the MME to send information about location update of the UE.

Using one of the options 18.1 to 18.4 the congestion notification information can be transmitted from the eNB to the PCRF. The PCRF then may take an appropriate action to apply a certain traffic management policy. What traffic management policy is to be applied depends on how the operator would like to mitigate the congestion at the eNB, for example, reducing or balancing the traffic and this may be operator or vendor specific.

According to one embodiment the PCRF performs a traffic management policy decision as follows:
- If there is a congestion notification for all bearers with ECGI the PCRF according to one embodiment is flexible to choose which UE and which bearer to reduce and/or limit how much of data rate (different impact for each UE)
- If there is a congestion notification for only congested bearers without ECGI info, the PCRF reduces and/or limits data rate for congested bearers

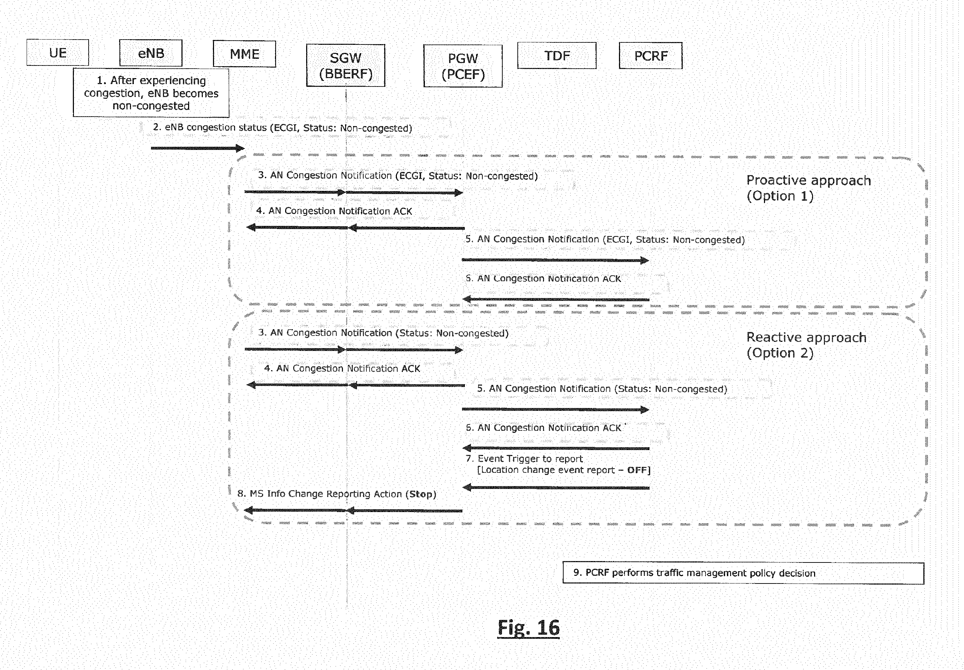

Fig. 16 illustrates the signaling for the case where after experiencing congestion the eNB becomes non-congested (step 1). This is signaled in step 2 to the MME.

For the signaling to the PCRF Fig. 16 then shows two options, a proactive approach (option 1) and a reactive approach (option 2). Steps 3 to 6 of both approaches illustrate the signaling from the MME to the PCRF. In case of option 2 there is additionally in step 7 sent event trigger to report which sets the location change event report to OFF. Furthermore in step 8 the MS change reporting action is stopped by sending a corresponding message from the PGW to the MME.

According to one embodiment the PCRF performs a traffic management policy decision as follows (step 9):
If there is a non-congested notification for all bearers with ECGI, the PCRF may recalculate whether the current traffic management policy fits to the eNB capacity. In case, there is still some capacity left, the PCRF may apply a different rate reduction policy to some flow or bearer or UE to increase data rate and thus improving service quality experienced by the user.

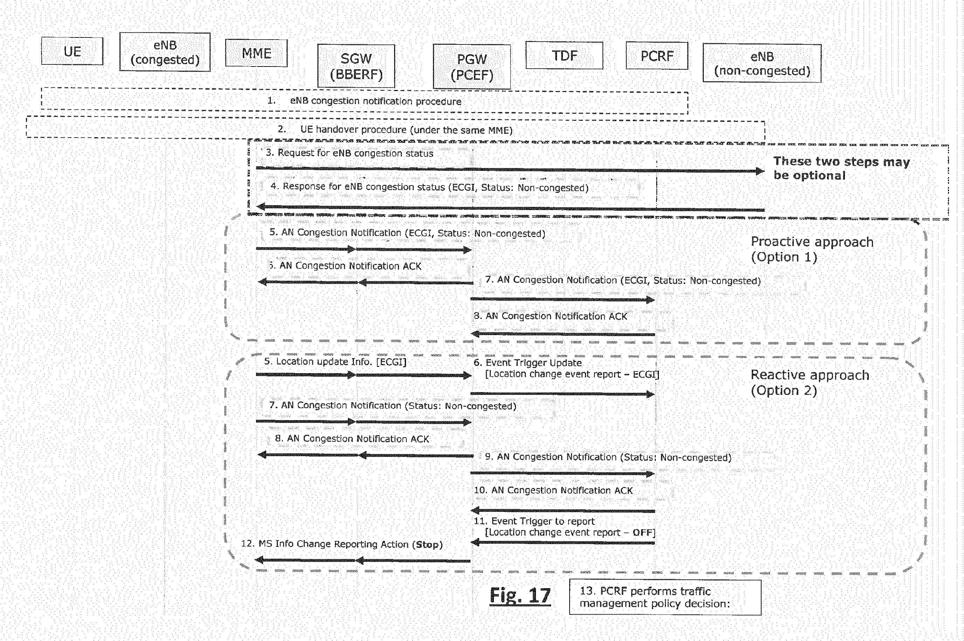

Another scenario is illustrated in Fig. 17, namely the case of the signaling flow for a UE handover from a congested eNB to a non-congested eNB. The UE moves under the same MME from a congested eNB to an uncongested one (steps 1 and 2).

Then there follow the two optional steps 3 and 4, and then the signaling from the MME to the PCRF according to option 1 or option 2 as illustrated in Fig. 17.

The signaling of these two options is similar to the one in case of the signaling for RAN non-congestion notification illustrated in Fig. 16.

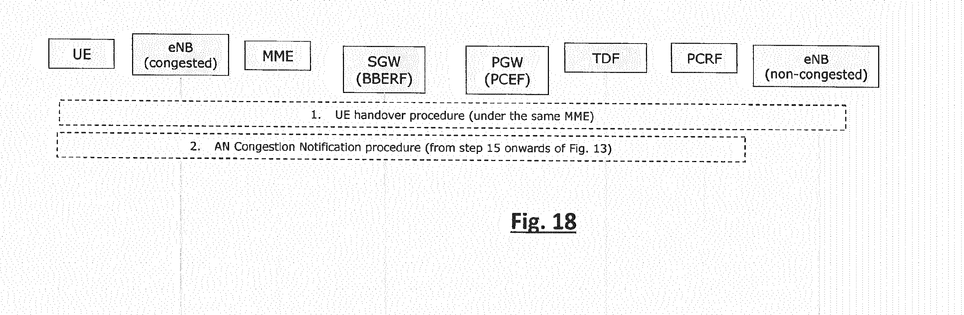

Fig. 18 illustrates the signalling for the case where there is a UE handover from a non-congested eNB to a congested eNB.

First there is performed a UE handover procedure (under the same MME) in step 1. Then an AN congestion notification procedure is performed as illustrated from step 15 onward in Figures 13 to 15.

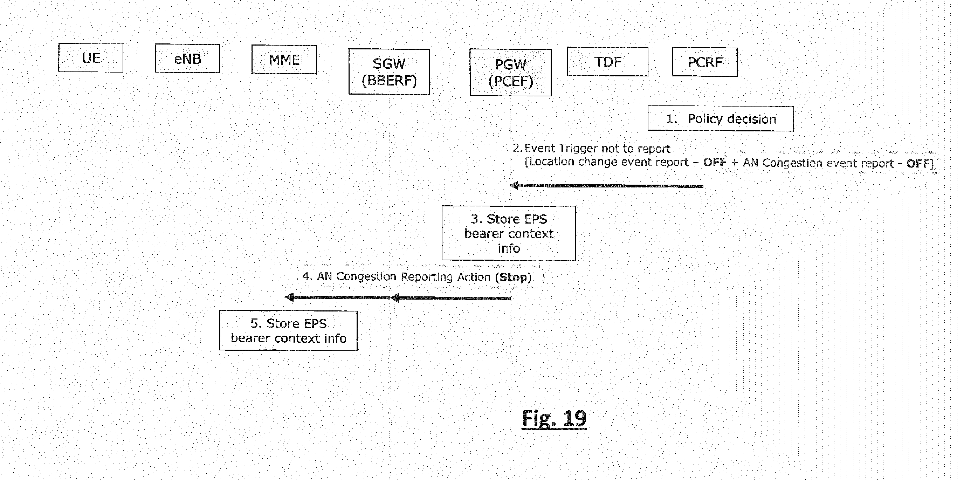

Fig. 19 illustrates the signaling for the case where there is a signal low for setting to "Off" the reporting opf an AN congestion notification.

In step 1 there is made a corresponding policy decision. Then there sent a message in step 2 which sets to Off the event trigger for location change event report and for congestion event report. The EPS bearer context info is then stored in step 3 in the PGW. The a signal is sent to the MME to stop AN congestion reporting, and in step 5 the EPS bearer context info is stored in the MME.

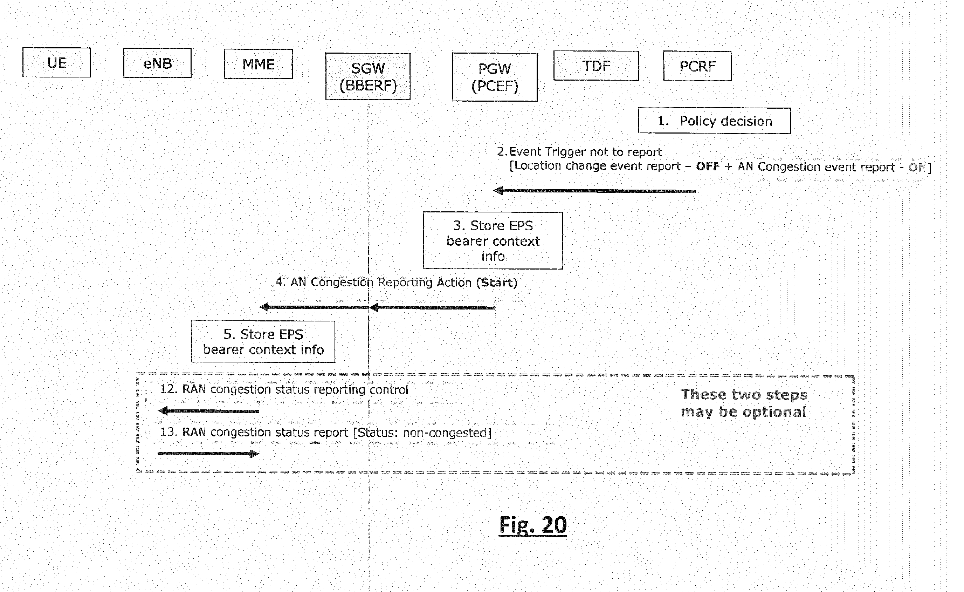

Fig. 20 illustrates the opposite case of Fig. 19, namely that there is a signaling flow for setting to "On" the reporting of an AN congestion notification.

First there is a corresponding policy decision (step 1). Then there is sent an event trigger not to report a location change event report (set to Off) but to send an AN congestion event report (set to On).

In step 3 the EPS bearer context info is stored. In step 4 the AN congestion reporting action is started by sending a message to the MME from the PGW. Then in the MME the bearer context info is stored.

Finally there follow the (optional) steps of a RAN congestion status notification control message (step 12) which requests the sending of an RAN congestion status report (step 13).

It should be noted that in all the foregoing embodiments the signaling between the eNB and the MME may be implemented using the S1AP protocol, the signaling between the MME and the PGW may be implemented using the PCC signalling mechanism. This PCC signalling mechanism comprises two components, a first one using the GTP-C protocol for the signalling between MME and PGW and a second one for the signaling between the PGW and the PCRF. The second one may be implemented using the PCC messaging mechanism by employing a event trigger and an event report indication. The event trigger may be defined as the congestion status fulfilling a certain criterion (e.g. lying beyond a certain threshold or level or just being indicative of "congested") or as a change in the congestion status.

The signaling between the PGW and the PCRF thereby may use the DIAMETER protocol which is already used to implement the PCC event reporting. For the congestion reporting there is just created a new PCC event, namely a "congestion event" which - when occurring - triggers a PCC event report, namely a congestion notification sent from the PGW to the PCRF.

In the foregoint there have been described mainly embodiments where the congestion status notification was forwarded from the wireless base station to the PCRF which may then take an appropriate mitigation action.

However, it is to be noted that the congestion notification does not necessarily in all cases have to be forwarded from said MME to said PCRF. According to one embodiment it may also be sufficient top forward said notification only to said PGW, this depends on how the policy for congestion mitigation and/or the congestion event policy is defined. For example, an operator according to one embodiment can specify in advance a policy that based on the congestion notification received at said PGW, and said PGW may perform a congestion mitigation technique immediately without forwarding a congestion notification to said PCRF. Alternatively, an operator can specify a policy such that said PCRF should always be informed about the congestion notification from the base station and as a result, the PCRF will react on it by, for example, specifying a policy to said PGW how said PGW should react on the congestion in the user data plane.

It is to be noted that the first example is more a proactive approach; while the latter approach is more a reactive approach. The description of the embodiments, mostly are based on a reactive approach in which the congestion notification is always forwarded from said PGW to said PCRF when said PGW receives a congestion notification from said MME. However, it should be kept in mind that in principle embodiments of the invention may also use the proactive approach where the PGW performs a congestion mitigation in response to receiving a congestion notification without forwarding a notification about the congestion status to the PCRF.

Using the described embodiments there may be implemented a notification of congestion for a mobile access network having a Policy and Charging Control (PCC) implemented.

The proposed mechanism provides or achieves:
- Small impact on existing 3GPP PCC specifications
- Low signalling load additionally introduced to the system
- Applicable for both GTP/PMIP based EPS architecture
- Allow operator to turn on and off for reporting a congestion notification event

## Claims

1. A method for notifying a congestion status in the wireless base station to a core network, said wireless base station being an access point that can be commonly shared among multiple user equipments (UE), said core network being a network that is operated by a network operator and comprising a mobility management entity MME, a packet gateway PGW, a serving gateway SGW and a policy and charging rules function PCRF, wherein said core network further has implemented a policy and charging control PCC mechanism and a corresponding PCC signaling mechanism said method comprising:
providing said wireless base station with the capability to transmit a signal indicating a congestion status to said MME;
using said PCC signaling mechanism to forward a congestion notification indicating said congestion status from said MME to said PCRF or to said PGW.

2. A method implementing a congestion event policy in the wireless base station and in the core network, said wireless base station being an access point that can be commonly shared among multiple user equipments (UE), said core network being a network that is operated by a network operator and comprising a mobility management entity MME, a packet gateway PGW, a serving gateway SGW and a policy and charging rules function PCRF, wherein said base station and said core network further have implemented a policy and charging control PCC mechanism and a corresponding PCC signaling mechanism, said method comprising:
using said PCC signalling mechanism for transporting a congestion event policy from said PCRF of said core network to said mobility management entity MME,
providing a signalling mechanism for transporting said congestion event policy from said MME to said wireless base station, and
using said congestion event policy in said wireless base station to decide based thereon which congestion status is to be indicated by said congestion notification.

3. The method of claim 1 or 2, wherein of said congestion status notification from said wireless base station to said core network leads via a signaling path from said wireless base station via said MME and said SGW to said PGW, or
from said wireless base station via said MME, said SGW and said PGW to said PCRF.

4. The method of one of claims 1 to 3, wherein
the PCC signalling mechanism between the MME and the PGW is used for sending the congestion status notification and a content related to the congestion status notification as a payload in the GTP-C protocol; and/or
the signalling mechanism between the wireless base station and the MME is implemented by sending the congestion status notification and a content related to the congestion status notification as a S1AP message using the S1AP protocol.

5. The method of one of claims 1 to 4, wherein the PCC signalling mechanism between the PGW and the PCRF uses
the PCC signalling mechanism for generating and/or defining a PCC trigger event by a message from the PCRF to the PGW, and/or
the PCC signalling mechanism for sending an event report from the PGW to the PCRF for reporting a congestion event.

6. The method of one of claims 1 to 5, wherein
a message reporting a congestion status which indicates a congestion from the MME to the PGW triggers a PCC event report which indicates a congestion status to be forwarded from the PGW to the PCRF to thereby inform the PCRF about a congestion status.

7. The method of one of the preceding claims, further comprising:
- monitoring resource usage in said wireless base station;
- based on the resource usage monitored by said wireless base station, if said resource usage fulfils a congestion condition defined in a congestion event policy, transmitting said congestion notification such that said congestion status indicated by said congestion notification indicates a congestion by said wireless base station via said a signalling mechanism from the wireless access network to the core network and via said PCC signalling mechanism from said MME to said PGW or to said PCRF.

8. The method of one of the preceding claims, further comprising:
using said signalling mechanism for transporting a congestion event support notification being an information signalled by the wireless base station to the core network to inform the core network and indicating that the congestion notification service is supported by the wireless base station.

9. The method of one of the preceding claims, wherein said congestion event policy contains
information on whether or not the wireless base station shall inform the core network about a congestion status by transmitting a congestion notification; and/or
information on how and/or when the wireless base station shall inform the core network about a status by transmitting a congestion notification.

10. The method of one of the preceding claims, wherein said information comprises as a congestion condition for transmitting a congestion status one or more of the following:
- when resource usage reaches 90% of the total available resources;
- when the buffer at wireless base station for 80% of all UEs served by the same wireless base station is getting full or reaches a predetermined limit.
- any change in the congestion status
- when UEs enter of leave the cell
- a time after which congestion updates are transmitted.

11. The method of one of the preceding claims, wherein said congestion status notification contains an information whether the wireless base station is congested or not congested.

12. The method of one of the preceding claims, wherein said congestion notification transmitted for notifying the core network about a congestion status comprises further information in addition to the congestion status of the wireless base station, said further information comprising one or more of the following:
- an identifier of wireless base station;
- wireless channel information
- a congestion level of the wireless base station
- the point of congestion.

13. An apparatus for notifying a congestion status in the wireless base station to a core network, said wireless base station being an access point that can be commonly shared among multiple user equipments (UE), said core network being a network that is operated by a network operator and comprising a mobility management entity MME, a packet gateway PGW, a serving gateway SGW and a policy and charging rules function PCRF, wherein said core network further has implemented a policy and charging control PCC mechanism and a corresponding PCC signaling mechanism said apparatus comprising:
a module for providing said wireless base station with the capability to transmit a signal indicating a congestion status to said MME;
a module for using said PCC signaling mechanism to forward a congestion notification indicating said congestion status from said MME to said PCRF or to said PGW.

14. An apparatus for implementing a congestion event policy in the wireless base station and in the core network, said wireless base station being an access point that can be commonly shared among multiple user equipments (UE), said core network being a network that is operated by a network operator and comprising a mobility management entity MME, a packet gateway PGW, a serving gateway SGW and a policy and charging rules function PCRF, wherein said base station and said core network further have implemented a policy and charging control PCC mechanism and a corresponding PCC signaling mechanism, said method comprising:
a module for using said PCC signalling mechanism for transporting a congestion event policy from said PCRF of said core network to said mobility management entity MME,
a module for providing a signalling mechanism for transporting said congestion event policy from said MME to said wireless base station, and
a module for using said congestion event policy in said wireless base station to decide based thereon which congestion status is to be indicated by said congestion notification.

15. The apparatus of claim 13 or 14, further comprising:
A module for carrying out a method according to one of claims 3 to 12.
